# DEMANDE DE BREVET EUROPEEN

(11) **EP 1 313 309 A1**
(43) Date de publication de la demande: **21.05.2003**
(21) Numéro de dépôt: 02368125.7
(22) Date de dépôt: 18.11.2002
(51) Int. Cl.: H04N 5/18

(54) **Dispositif de calibrage pour un étage d'entrée vidéo**

(30) Priorité: 19.11.2001 FR 0114921
(71) Demandeur: STMicroelectronics S.A., 92120 Montrouge (FR)
(72) Inventeur: Van Zanten, Francois, 38240 Meylan (FR); Sabut, Marc, 38320 Eybens (FR); Ribas, Raymond, 38650 St. Martin de la Cluze (FR)
(74) Mandataire: Schuffenecker, Thierry

(57) **Abrégé**

Etage d'entrée pour un récepteur vidéo comportant un amplificateur à gain variable, un convertisseur analogique-numérique destiné à prélever des échantillons du signal vidéo et une unité de traitement numérique destiné à traiter les échantillons numériques de ce signal vidéo. L'étage d'entrée est caractérisé en ce qu'un circuit de régulation analogique fixe le potentiel d'entrée à l'entrée de l'amplificateur à gain variable. Préférentiellement, on utilise une architecture différentielle pour l'amplificateur à gain variable et pour le convertisseur analogique numérique. On intercale à cet effet, entre le condensateur de liaison et l'amplificateur à gain variable, un circuit de conversion permettant de générer le signal vidéo sur deux voies en opposition de phase, lesquelles sont centrées sur le potentiel de mode commun. L'architecture différentielle permet de réduire la course des signaux analogiques, se qui se révèle particulièrement avantageux dans le cas d'une tension d'alimentation basse de quelques volts. De surcroît, on améliore alors la linéarité du traitement du signal vidéo.

## Description

### Domaine technique de l'invention

La présente invention concerne les étages d'entrée de traitement vidéo et plus spécialement un dispositif de calibrage pour un étage d'entrée destiné au traitement d'un signal vidéo.

### Etat de la technique

Les étages d'entrée destinés au traitement du signal vidéo comportent habituellement un circuit de calibrage des circuits en aval dans le récepteur et éviter toute saturation de ces derniers.

A cet effet on utilise un signal de référence - correspondant au codage du noir - juste après le signal de synchronisation ligne du signal vidéo et le circuit récepteur utilise cette référence pour calibrer ses circuits internes de manière à éviter toute saturation.

Les performances exigées par les circuits d'entrée des signaux vidéo, parallèlement à la miniaturisation de ces derniers et à l'abaissement de la tension d'alimentation mettent en exergue les faiblesses des étages d'entrée connus.

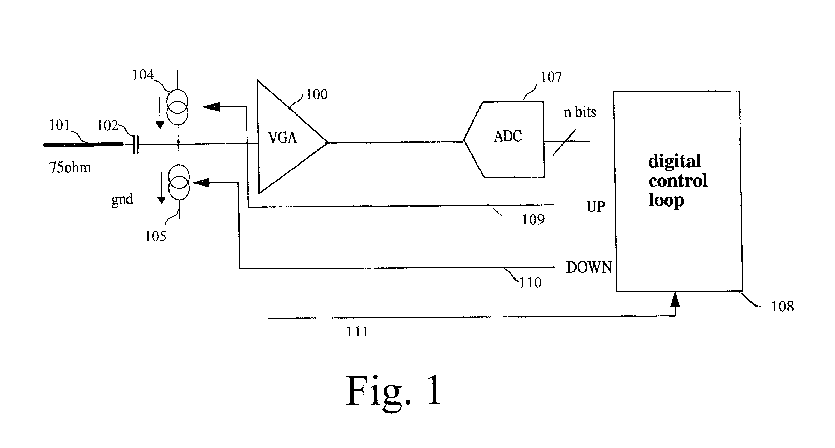

La figure 1 rappelle l'architecture classique d'un étage d'entrée doté d'un circuit de calibrage connue sous la dénomination « I-8I ». On trouve sur la figure un condensateur de liaison 102 qui réalise le découplage continu de la ligne 101. Le condensateur de liaison 102 permet de supprimer la composante continu du signal d'entrée et peut être chargée et déchargée par deux sources de courants 104 et 105 qui sont respectivement commandées par deux signaux de commandes (UP) et (Down) véhiculés par les lignes 109 et 110. En aval du condensateur de liaison, le signal vidéo est amplifié par un amplificateur VGA 100 fournissant en sortie un signal qui est alors converti sous une forme numérique au moyen d'un convertisseur analogique-numérique ADC 107. Le convertisseur ADC 107 fournit au rythme d'une horloge d'échantillonnage des échantillons du signal vidéo qui sont codés sur n bits. Les échantillons numériques font ensuite l'objet d'un traitement approprié au moyen d'une unité de traitement numérique 108, lequel traitement comprend notamment le calcul du gain de l'amplificateur VGA 100 ainsi que la détermination du potentiel d'entrée de ce dernier (dénommée « *clamp setting »* dans la littérature anglo-saxonne).

D'une manière générale, on s'efforce d'assurer, au moment de la réception du signal de référence correspondant au noir, un codage moyen égal à 0 (sur n bits) de manière à pouvoir bénéficier de toute la dynamique du système de codage et d'éviter toute saturation. A cet effet, dans le système connu sous la dénomination « I-8l », le traitement numérique effectué par l'élément de traitement numérique 108 fournit un signal de commande, soit UP sur la ligne de commande 109 soit DOWN sur la ligne de commande 110 de manière à venir respectivement commander la source de courant 104 ou la source de courant 105.

Si ce système connu conduit à des résultats satisfaisants pour la conception des étages d'entrée des récepteurs vidéo classiques, on s'aperçoit que ce n'est plus le cas pour les architectures modernes de récepteurs vidéos pour les raisons suivantes .

En premier lieu, le système « I-8I » ne permet pas - et cela est connu - d'assurer une correction parfaite de l'erreur de calibrage. On constate que l'effet de la commande sur l'un des deux circuits de commande - soit UP soit DOWN - conduit toujours à maintenir un écart entre la référence parfaite et le code en sortie du convertisseur analogique. Ce défaut de précision apparaît aujourd'hui rédhibitoire au regard des performances exigées des récepteurs vidéos modernes.

En second lieu, la miniaturisation des circuits vidéos conduit à accumuler un nombre sans cesse croissant de composants électroniques dans des circuits semiconducteurs. La taille des composants élémentaires, notamment celle des transistors MOS, se réduit et on est alors contraint de réduire les tensions d'alimentation. Ce phénomène est d'ailleurs accentué par le développement de l'électronique dite « portable » ou embarquée, alimentée par des tensions d'alimentation de plus en plus faible.

Il n'est pas rare d'alimenter des circuits vidéo à partir de tensions d'alimentation ne dépassant pas 2 volts.

Lorsque la tension d'alimentation se réduit on s'aperçoit que toute erreur dans la calibrage de l'étage d'entrée du récepteur vidéo réduit la plage restante pour le codage numérique du signal vidéo et, par conséquent, accroît les risques de saturation du récepteur. En outre, la tension d'alimentation se réduisant, on réduit également la course des signaux que l'on peut traiter par les circuits du récepteur. Si l'on utilise des circuits d'amplification dits « rail to rail », on affecte la linéarité et on introduit un taux de distorsion rédhibitoire.

### Exposé de l'invention

La présente invention a pour but de proposer une architecture d'étage d'entrée pour un récepteur vidéo qui permet une calibrage précise et efficace.

Un autre but de la présente invention consiste à réaliser un étage d'entrée de récepteur vidéo qui est adapté à l'emploi de basses tensions d'alimentation.

Un troisième but de la présente invention consiste à réaliser un étage d'entrée pour un récepteur vidéo qui permet de maintenir un taux de distorsion particulièrement bas.

L'invention réalise ces buts au moyen d'un étage d'entrée pour un récepteur vidéo comportant un amplificateur à gain variable, un convertisseur analogique-numérique destiné à prélever des échantillons du signal vidéo et une unité de traitement numérique destiné à traiter les échantillons numériques de ce signal vidéo. L'étage d'entrée est caractérisé en ce qu'un circuit de régulation analogique fixe le potentiel d'entrée à l'entrée de l'amplificateur à gain variable.

Ainsi on peut alors réaliser une véritable régulation de ce potentiel, et s'affranchir des limites inhérentes au système « tout ou rien » du circuit I-8I.

Dans un mode de réalisation préféré, on adopte une architecture différentielle pour l'amplificateur à gain variable et pour le convertisseur analogique numérique. On intercale à cet effet, entre le condensateur de liaison et l'amplificateur à gain variable, un circuit de conversion permettant de générer le signal vidéo sur deux voies en opposition de phase, lesquelles sont centrées sur le potentiel de mode commun. L'architecture différentielle permet de réduire la course des signaux analogiques, se qui se révèle particulièrement avantageux dans le cas d'une tension d'alimentation basse de quelques volts. De surcroît, on supprime les harmoniques paires au moyen de la structure différentielle, ce qui améliore substantiellement la linéarité du traitement du signal vidéo.

On observe que la structure différentielle est particulièrement adaptée puisque l'on arrive à réaliser le prépositionnement continu (D.C. en littérature anglo-saxonne) sur les deux voies de la structure différentielle.

Dans un mode de réalisation préféré, la régulation analogique du potentiel d'entrée est réalisée au moyen d'un convertisseur tension-courant ayant une première entrée prélevant le potentiel à l'une des sorties différentielles de l'amplificateur à gain variable et une seconde entrée recevant un potentiel de consigne CVR émanant du circuit de traitement numérique. Le convertisseur tension-courant fournit alors un courant qui sert à charger ou à décharger le condensateur de liaison de manière à réaliser l'ajustement du potentiel à l'entrée du convertisseur différentiel. Une entrée de commande PDN permet de bloquer le convertisseur tension-courant lorsque le signal vidéo ne transmet pas la référence du noir.

Comme on le voit, l'étage d'entrée réalise un asservissement précis du courant de charge du condensateur de liaison, contrairement à la structure « tout ou rien » du circuit classique « I-8I », et est particulièrement adapté à la réalisation de récepteurs devant fonctionner à des faibles valeurs de tension d'alimentation.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une architecture classique d'étage d'entrée de récepteur vidéo comportant un circuit de calibrage « I-8I ».
La figure 2 représente l'architecture de l'étage d'entrée selon la présente invention.
La figure 3a représente un premier exemple de réalisation du convertisseur différentiel 106.
La figure 3b illustre un second exemple de réalisation du convertisseur différentiel 106 offrant des performances supérieures.
La figure 4 illustre le détail d'un mode de réalisation du convertisseur différentiel 106 de la figure 3b.

### Description d'un mode de réalisation préféré

On décrira à présent un mode de réalisation préféré de l'invention particulièrement adaptée à la constitution d'étage d'entrée pour un circuit vidéo alimenté par batterie. Bien évidemment, il ne s'agit que d'un exemple de réalisation et l'on pourra envisager fort opportunément l'emploi du circuit pour d'autres applications.

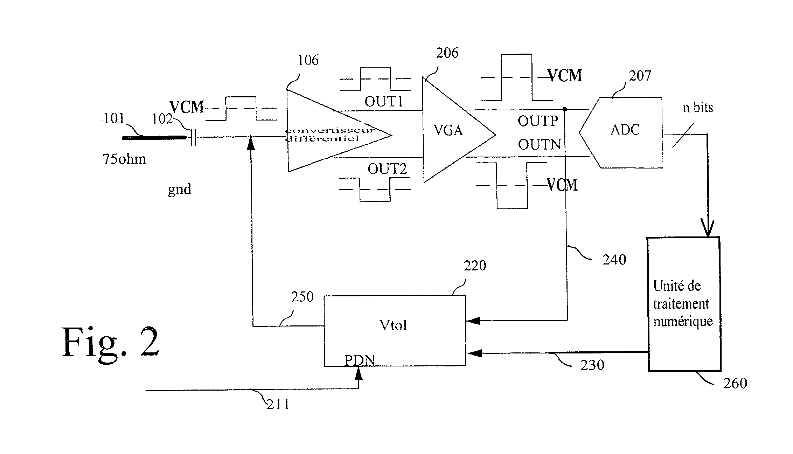

La figure 2 illustre l'architecture d'un mode de réalisation préféré de l'étage d'entrée du récepteur. Le signal vidéo est transmis par la ligne 101 vers le condensateur de liaison 102, lequel supprime la composante continue du signal vidéo. En amont du condensateur de liaison, le signal est transmis à un circuit de conversion différentielle 106 permettant de générer deux signaux de sortie, respectivement OUT1 et OUT2 sur la figure 2, qui sont en opposition de phase et tous deux centrés sur le potentiel de mode commun VCM. Les deux signaux différentiels OUT1 et OUT2 sont ensuite transmis à un amplificateur différentiel à gain variable (dit VGA) 206 dont le gain est fixé par un potentiel (non représenté) et commandé par une unité de traitement numérique 260. L'amplificateur différentiel à gain variable 206 fournit en sortie deux signaux - respectivement OUT P et OUT N - qui sont transmis à un convertisseur analogique-numérique ADC 207 présentant une structure différentielle qui permet de prélever des échantillons du signal différentiel à une cadence prédéfinie lesquels sont codés sur n bits et sont ensuite transmis à l'unité de traitement numérique 260.

L'amplificateur différentiel 206 et le convertisseur analogique-numérique 207 à structure différentielle sont des circuits bien connus de l'homme du métier et ils ne seront pas plus détaillés. On se bornera à préciser que la structure différentielle qui est d'emblée adoptée dans cette architecture permet de réduire la course des signaux analogiques traités pour un signal vidéo donné. Ainsi pour un signal vidéo présentant une amplitude crête à crête de 1 volt, on observe que l'on peut effectuer un traitement analogique du signal vidéo avec des amplitudes dont la course ne dépasse pas 250 millivolts, ce qui est particulièrement utile lorsque l'on alimente à très basse tension. On peut, au moyen de cette structure différentielle, , assurer une grande linéarité pour le traitement analogique en réduisant le taux d'harmoniques paires et maintenir le taux de distorsion (*Total Harmonic Distorsion*) à un taux très bas.

Dans un mode de réalisation particulier, l'un des signaux analogiques - par exemple le signal OUT P - est transmis à une première entrée 240 d'un convertisseur tension-courant 220 présentant une seconde entrée 230 recevant un potentiel de référence CVR (*Clamp Voltage Reference*). Le convertisseur tension-courant est également connu sous le nom de circuit de transconductance ou *« operational transconductance amplifier* » (OTA) dans la littérature anglo-saxonne. Il s'agit d'un circuit qui réalise la conversion de la différence de potentiel existant entre les deux entrées 230 et 240 en un courant qui est véhiculé par un circuit 250 de manière à venir , selon le cas, charger ou décharger le condensateur de liaison 102. Le convertisseur tension-courant 220 est inhibé au moyen d'un signal de commande transmis à une entrée PDN via une ligne de commande 211 de manière à stopper tout écoulement du courant de charge ou décharge du condensateur en dehors de la réception du signal de référence du noir.

On observe ainsi que l'on peut réaliser un asservissement analogique direct du potentiel d'entrée au moyen du convertisseur tension-courant qui vient charger ou décharger le condensateur 102. Ce potentiel d'entrée peut ainsi être très rapidement et très précisément ajusté au moyen de la référence CVR fournit par le système de traitement numérique situé en aval de l'étage d'entrée.

On arrive ainsi, avec ce dispositif à assurer une calibrage de l'étage d'entrée du récepteur qui permette d'assurer un codage « 0 » en sortie du convertisseur 207 lors de la réception du signal de référence correspondant au « noir » de calibrage.

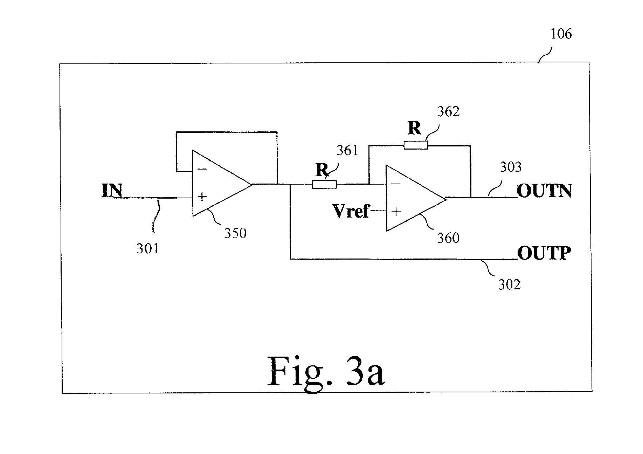

La figure 3a montre une réalisation très simple du convertisseur différentiel 106 basée sur l'emploi d'amplificateurs opérationnels. Un premier amplificateur opérationnel (AO) 350 est monté en suiveur et reçoit le signal d'entrée IN porteur du signal vidéo sur son entrée positive. L'entrée négative est connectée à la sortie. L'amplificateur 350 attaque ensuite un montage inverseur basé sur un second amplificateur opérationnel 360 associé à une première résistance 361 connectée entre la sortie de l'AO 350 et l'entrée négative de l'AO 360, cette même entrée négative étant connectée à la sortie de l'AO 360 via une seconde résistance 362. Un potentiel de référence Vref est transmis à l'entrée positive de l'AO 360 et sert à fixer le potentiel de mode commun autour duquel sont centrées les deux voies différentielles ainsi générées, respectivement en sortie de l'AO 350 (OUT P sur une borne 302) et en sortie de l'AO 360 (OUT N sur la borne 303).

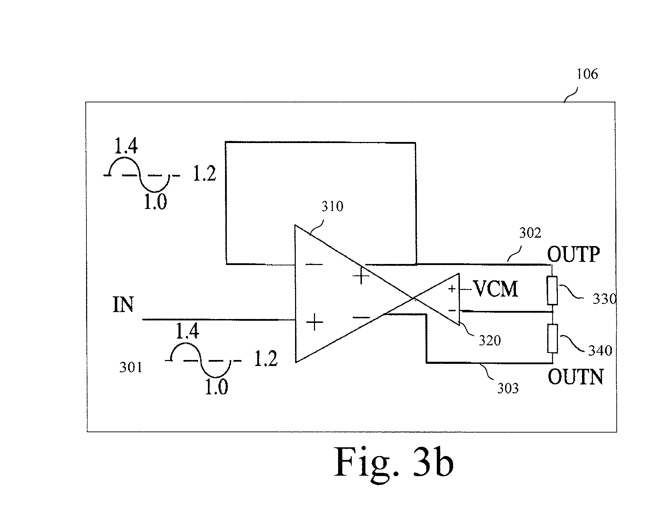

On observe que les performances du circuit de la figure 3a sont limitées, notamment lorsque l'on recherche un faible taux de distorsion et une dynamique d'entrée élevée. Dans ce cas, on pourra avantageusement utiliser le circuit de la figure 3b, basé sur une structure différentielle à base de transistor de type Metal Oxyde Silicium, laquelle permet des performances supérieures notamment en terme de linéarité et de dynamique d'entrée.

Le convertisseur de la figure 3B comporte une structure différentielle amplificateur différentiel 310, basé par exemple sur une architecture composée de transistors *Metal Oxyde Silicium (MOS),* dont une entrée positive 301 reçoit le signal vidéo d'entrée. L'amplificateur différentiel fournit en sortie deux signaux, respectivement OUT P sur une borne 302 et OUT N sur une borne 303. Le signal de sortie OUT-P est connecté à l'entrée négative de l'amplificateur différentiel, en sorte que ce signal OUT-P se trouve asservi au signal d'entrée IN existant sur la borne 301.

On intercale un pont de résistance, composé des résistances 330 et 340, de valeur égale, connectées en série entre les bornes 302 (OUT P) et 303 (OUT N), et on branche le point milieu de ce pont résistif sur une entrée négative d'un second amplificateur différentiel 320 - dit de mode commun- , dont l'entrée positive reçoit le potentiel de référence de mode commun VCM. On réalise une interaction entre l'amplificateur de mode commun 320 et l'amplificateur différentiel 310 de manière à ce que celui-ci voit son fonctionnement asservi à la génération de deux signaux OUT P et OUT N en opposition de phase et parfaitement centrée autour du potentiel de mode commun VCM existant à l'entrée positive de l'amplificateur 320.

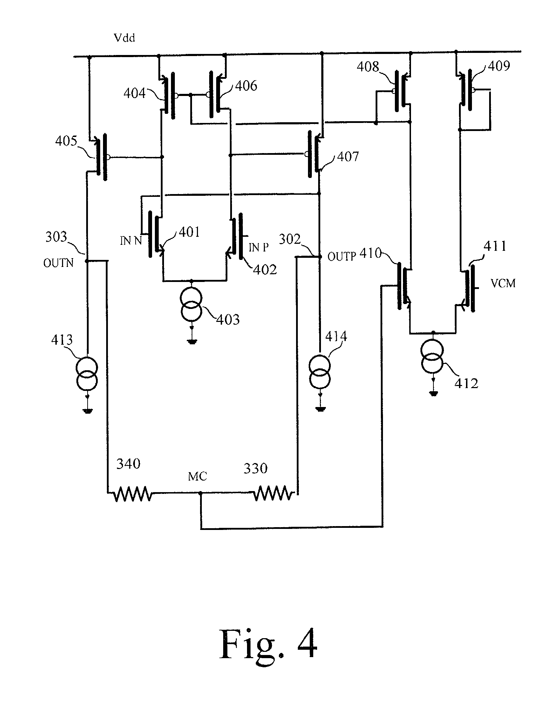

La figure 4 montre un exemple de réalisation du convertisseur différentiel 106 (dit « *single to differentiel converter»* en littérature anglo-saxonne) de la figure 3b réalisé au moyen d'une structure différentielle basée sur une paire de transistors 401 et 402 de type NMOS. Bien que le mode de réalisation préféré décrira l'emploi de transistors de type NMOS pour réaliser la paire différentielle, il est clair que l'homme du métier pourra directement adapter la structure à une architecture dans laquelle la paire différentielle sera basée sur des transistors de type PMOS. L'amplificateur est alimenté au moyen d'une source d'alimentation délivrant une tension V_{dd} . L'électrode de source des transistors NMOS 401 et 402 est reliée à une source de courant 403 dont l'autre extrémité est connectée à la masse. Chaque transistor de la paire différentielle 401-402 est alimenté via son électrode de drain par une source de courant, respectivement basée sur un transistor PMOS 404 et sur un transistor PMOS 406 montés en miroir de courant. Les source et drain du transistor 404 (resp. transistor 406) sont respectivement connectées à la borne d'alimentation V_{dd} et au drain du transistor 401 (resp. transistor 402).

Les transistors 404 et 406 sont montés en miroir du courant coopérant avec un étage de gestion du mode commun qui comporte une seconde paire différentielle associée à une source de courant 412 et deux transistors de type PMOS, respectivement 408 et 409. Plus particulièrement, la seconde paire différentielle comporte deux transistors 410 et 411 dont les sources sont connectées à une source de courant 412 présentant une autre extrémité connectée à la masse. Le drain du transistors 410 (resp. transistor 411) est connecté au drain du transistor 408 (resp. transistor 409), dont la source est connectée à la borne d'alimentation V_{dd}. La grille du transistor 410 est connectée au point milieu d'un pont résistif, comportant les deux résistances 340 et 330 de valeur identiques, dont les extrémités sont respectivement connectées aux bornes de sorties OUT N (borne 303) et OUT P (borne 302) de la structure différentielle. Le pont résistif 340-330 est utilisé pour permettre l'obtention, en son point milieu MC, d'un potentiel représentatif de la valeur de mode commun des sorties OUT P et OUT N de l'amplificateur différentiel. La grille du transistor 411 reçoit une tension de consigne - V_{cm}- qui est utilisée pour régler le niveau de polarisation de l'étage en mode commun et qui est commandé par l'unité de traitement numérique de manière à produire un code « 0 » en sortie du convertisseur analogique-numérique ADC 207.

Les électrodes de grilles des transistors 408, 404 et 406 sont toutes connectées ensemble et la grille du transistor 408 est connecté au drain de ce même transistor, assurant ainsi son fonctionnement dans la zone quadratique de sa caractéristique I (V_{gs}). Les transistors sont ainsi montés en miroir de courant et sont parcourus par un même courant de drain puisque, étant sensiblement identiques, ils sont soumis aux mêmes variations de la tension grille-source V_{gs}.

La paire différentielle composée des transistors 401 et 402 sert de premier étage à un second étage de gain de type Miller, lequel est composé d'une paire de transistors 405 et 407 de type PMOS montés en source commune. Plus précisément, le drain du transistor 401 (resp. 402) est connecté à la grille du transistor 405 (resp. 407), dont la source est connectée à la borne d'alimentation V_{dd}. Le drain du transistor 405 (resp. 407) est connecté à une source de courant 413 (resp. 414), elle-même connectée, à son autre extrémité à la masse. Le drain du transistor 405 est également connecté à l'électrode de sortie 303 OUT-N du convertisseur. De la même manière le drain du transistor 407 sera connecté à l'électrode de sortie 302 OUT P du convertisseur différentiel.

Le schéma de la figure 4 ne consiste qu'en un mode de réalisation particulier. On pourra dans certain cas, adjoindre à l'étage de Miller un condensateur (non représenté) pour fixer le produit gain-bande de la structure différentielle, comme cela est connu par l'homme du métier.

## Revendications

1. Etage d'entrée d'un circuit vidéo destiné à recevoir un signal vidéo d'une ligne via un condensateur de liaison (102), ledit circuit comportant un amplificateur à gain variable (206), un convertisseur analogique-numérique (207) destiné à prélever des échantillons dudit signal vidéo, **caractérisé en ce qu'**il comporte en outre :
- un circuit de régulation analogique (220) actif lors de la réception du signal de référence en début de chaque synchronisation ligne, ledit circuit de régulation analogique ayant une première entrée recevant le potentiel de sortie dudit amplificateur à gain variable (206), une seconde entrée recevant un potentiel de consigne (CVR); et une sortie fournissant un courant de charge destiné à charger ledit condensateur de liaison (102) de manière à fixer précisément le potentiel d'entrée.

2. Etage d'entrée pour un circuit vidéo tel que défini dans la revendication 1 **caractérisé en ce que** le circuit de régulation analogique comprend un convertisseur tension-courant permettant de générer en sortie un courant de charge en fonction de la différence de potentiel existant entre lesdites première et seconde entrée.

3. Etage d'entrée pour un circuit vidéo tel que défini dans la revendication 2 **caractérisé en ce qu'**il comporte une unité de traitement numérique (260) destiné à recevoir les échantillons générés par ledit convertisseur analogique numérique, ladite unité de traitement numérique (260) commandant le potentiel de référence (CVR) transmise à la seconde entrée du convertisseur tension-courant.

4. Etage d'entrée pour un circuit vidéo tel que défini dans la revendication 3 **caractérisé en ce qu'**il comporte un convertisseur différentiel (106) permettant de transmettre le signal vidéo sur deux voies en opposition de phase centrées sur le potentiel de mode commun, et **en ce que** ledit amplificateur à gain variable (206) et ledit convertisseur analogique-numérique (207) comportent une structure différentielle.

5. Etage d'entrée pour un circuit vidéo tel que défini dans la revendication 4 **caractérisé en ce que** le convertisseur différentiel comporte un premier amplificateur opérationnel (350) monté en suiveur, attaquant un étage inverseur comportant un second amplificateur opérationnel (360) monté en inverseur avec une première résistance (361) connectée entre la sortie dudit premier amplificateur opérationnel et l'entrée négative dudit second amplificateur opérationnel, et une seconde résistance (362) connectant l'entrée négative avec la sortie dudit second amplificateur opérationnel, les sorties dudit premier et dudit second amplificateur opérationnel fournissant les deux voies différentielles en opposition de phase.

6. Etage d'entrée pour un circuit vidéo tel que défini dans la revendication 4 **caractérisé en ce que** le convertisseur différentiel comporte un premier amplificateur différentiel (310) présentent une première entrée (301) - positive - recevant le signal vidéo à traiter et une seconde entrée - négative - , ledit premier amplificateur différentiel comportant une première sortie OUT P connectée à ladite seconde entrée ainsi qu'une seconde sortie OUT N en opposition de phase avec ladite première sortie OUT P, les deux sorties OUT N et OUT P étant connectés par un pont résistif comportant une première et une seconde résistance en série, ledit premier amplificateur différentiel étant commandé par un second amplificateur ayant une première entrée recevant un potentiel de consigne et une seconde entrée connecté au point milieu dudit pont résistif.

7. Etage d'entrée pour un circuit vidéo tel que défini dans la revendication 4 **caractérisé en ce que** le convertisseur différentiel comporte un circuit amplificateur différentiel disposant de deux électrodes d'entrées (IN N, IN P), deux électrodes de sortie (OUT N, OUT P) et comportant :
- un premier étage composé d'un premier et second transistor (401, 402) de même polarité et montés en amplificateur différentiel, lesdits premier et second transistor étant respectivement alimentés par une première et une seconde source de courant miroir (404, 406) dont le courant est commandé par un circuit de contrôle gérant le mode commun (410, 411, 408, 409) ayant deux entrées respectivement recevant une valeur de consigne V_{cm} et le potentiel d'une électrode qui est représentatif du potentiel de mode commun desdites sorties (OUT N, OUT P) ;
- un second étage de gain de Miller dont les sorties sont connectées aux dites électrodes de sortie (OUT N, OUT P), ledit second étage comportant un troisième et un quatrième transistor (405, 407) de type inverse des précédents et dont les entrées reçoivent les signaux de sorties dudit premier étage,

8. Etage d'entrée pour un circuit vidéo **caractérisé en ce que** lesdits premier, second, troisième et quatrième transistors sont respectivement des transistors de type NMOS, NMOS, PMOS et PMOS, et **en ce que** l'étage de gain de Miller comporte deux transistors de type PMOS montés en source commune et dont les drains sont respectivement connectées aux dites sorties OUT N et OUT P et dont les grilles sont respectivement connectées de manière à recevoir le signal de sortie correspondant dudit premier étage.

9. Etage d'entrée pour un circuit vidéo **caractérisé en ce que** le convertisseur différentiel comporte un cinquième et sixième transistor (404, 405) de type PMOS pour réaliser lesdites première et seconde source de courant alimentant respectivement les premiers et second transistors (401, 402) de la paire différentielle, lesdits cinquième et sixième transistor étant montés en source commune et présentant chacun un drain qui est connecté au drain correspondant de l'un desdits premier et second transistor de la paire différentielle, et présentant en outre une grille qui est commandée par ledit circuit de gestion du mode commun.
